# EUROPÄISCHE PATENTSCHRIFT

(11) **EP 3 470 208 B1**
(45) Veröffentlichungstag und Bekanntmachung des Hinweises auf die Patenterteilung: **24.03.2021**
(21) Anmeldenummer: 18199966.5
(22) Anmeldetag: 11.10.2018
(51) Int. Cl.: B29C 64/153, B29C 64/218, B33Y 30/00

(54) **DOSIERVORRICHTUNG, VORRICHTUNG UND VERFAHREN ZUM GENERATIVEN HERSTELLEN EINES DREIDIMENSIONALEN OBJEKTS**
DOSING DEVICE, METHOD AND DEVICE FOR GENERATIVE PRODUCTION OF A THREE-DIMENSIONAL OBJECT
DISPOSITIF DE DOSAGE, PROCÉDÉ ET DISPOSITIF DE FABRICATION ADDITIVE D'UN OBJET TRIDIMENSIONNEL

(30) Priorität: 11.10.2017 DE 102017218175
(43) Veröffentlichungstag der Anmeldung: 17.04.2019
(73) Patentinhaber: EOS GmbH Electro Optical Systems, 82152 Krailling (DE)
(72) Erfinder: MERZ, Karl, 5734 Reinach (CH); BAUMANN, Andreas, 82166 Gräfelfing (DE); SCHMID, Ulrich, 86911 Dießen am Ammersee (DE)
(74) Vertreter: Prüfer & Partner mbB Patentanwälte · Rechtsanwälte

(56) Entgegenhaltungen:
- WO-A1-2017/108867
- US-A1- 2014 363 585

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines pulverförmigen Aufbaumaterials, insbesondere auf eine in dieser Vorrichtung enthaltene und bei diesem Verfahren verwendete Dosiervorrichtung für ein pulverförmiges Aufbaumaterial.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Um ein Objekt mit guter Qualität zu erhalten, ist es u.a. wichtig, dass die aufgebrachten Pulverschichten als gleichmäßige Schichten mit einer vorab festgelegten Dicke, d. h. Schichtstärke, aufgebracht werden, wozu eine genaue Dosierung des Pulvers für den Schichtauftrag nötig ist. Der Schichtauftrag erfolgt mittels eines Beschichters, der in einer Beschichtungsrichtung über ein Baufeld verfahren wird. Für eine exakte Dosierung der für einen Schichtauftrag benötigten Pulvermenge ist aus der WO 02/062560 A1 eine Dosierwalze an der Austrittsöffnung eines Befüllbehälters angeordnet. Die Dosierwalze weist an ihrer Oberfläche symmetrisch angeordnete Kerben auf, die in axialer Richtung verlaufen und ein definiertes Volumen an Pulver aufnehmen können. Dadurch ist es möglich, dem Beschichter eine definierte Pulvermenge zuzuführen.

In der Regel erstreckt sich der Beschichter über eine Breite des Baufelds und wird für einen Schichtauftrag über dessen Länge verfahren. Die so aufgebrachte Pulverschicht weist in der Regel einen rechteckigen Querschnitt auf. Abhängig von der Geometrie des herzustellenden Objekts und/oder einer Anordnung mehrerer herzustellender Objekte in einem Bauraum kann es jedoch vorteilhaft sein, wenn die aufgebrachte Pulverschicht (d.h. der Beschichtungsbereich) eine nicht rechteckige Fläche ist.

Dies ist beispielsweise mit einem in der WO 2017/009249 A2 gezeigten Beschichter realisierbar. Der Beschichter umfasst eine Mehrzahl von Vorratskammern, die unabhängig voneinander pulverförmiges Aufbaumaterial abgeben können. Dadurch kann der Beschichter auch senkrecht zu seiner Bewegungsrichtung lokal unterschiedliche Pulvermengen abgeben. Die Genauigkeit der Pulverdosierung senkrecht zur Beschichtungsrichtung ist dabei durch die Anzahl der Vorratskammern bzw. deren Abmessungen senkrecht zur Bewegungsrichtung des Beschichters vorgegeben.

US 2014/0363585 A1 beschreibt eine additive Schichtbauvorrichtung zur Herstellung eines dreidimensionalen Objekts aus einem pulverförmigen Aufbaumaterial. Zum Aufbringen einer Pulverschicht wird Pulver aus einem trichterförmigen Behälter, an dessen Öffnung eine rotierende Dosierwalze vorgesehen ist, an einen Arbeitsbereich ausgegeben und von einer Beschichtungsvorrichtung zu einer dünnen Schicht ausgezogen. Die Dosierwalze weist sich in Längsrichtung der Walze erstreckende Rillen auf, die eine reproduzierbare Pulverportion definieren.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines pulverförmigen Aufbaumaterials bereitzustellen, insbesondere eine in dieser Vorrichtung enthaltene und bei diesem Verfahren verwendete Dosiervorrichtung bereitzustellen, mit der für einen Schichtauftrag lokal unterschiedliche Pulvermengen bereitgestellt werden können.

Diese Aufgabe wird gelöst durch eine Vorrichtung gemäß Anspruch 1, ein Dosierverfahren gemäß Anspruch 10 und ein Verfahren gemäß Anspruch 11. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Vorrichtungen und der Verfahren können auch jeweils untereinander zur Weiterbildung genutzt werden.

Eine erfindungsgemäße Dosiervorrichtung dient als Aus- oder Nachrüstsatz für eine Vorrichtung zum Herstellen eines dreidimensionalen Objekts durch schichtweises Verfestigen von pulverförmigem Aufbaumaterial an den dem Querschnitt des herzustellenden Objekts in der jeweiligen Schicht entsprechenden Stellen. Die Dosiervorrichtung weist ein Dosierelement auf, das um eine Achse, vorzugsweise eine eigene Achse, besonders bevorzugt um eine, insbesondere eigene, Längsachse, drehbar ist und das dazu geeignet ist, das pulverförmige Aufbaumaterial dosiert abzugeben, wobei das Dosierelement dazu ausgebildet ist, entlang der Richtung der Achse lokal unterschiedliche Pulvermengen abzugeben.

Als Längsachse wird hier eine entlang einer Längsseite des Dosierelements verlaufende Achse, vorzugsweise eine Mittelachse, des Dosierelements bezeichnet. Da die Dichte des von dem Dosierelement aufgenommenen und wieder abgegebenen Pulvers als im Wesentlichen konstant angenommen werden kann, ist die abgegebene Pulvermenge direkt proportional zu dem abgegebenen Pulvervolumen. Das Dosierelement ist also unter anderem dazu ausgebildet, entlang der Richtung der Achse lokal unterschiedliche Pulvervolumen abzugeben.

Mit einer derartigen Dosiervorrichtung ist es beispielweise möglich, auf einfache Art und Weise lokal unterschiedliche Pulvermengen für das Aufbringen einer Pulverschicht bereitzustellen. Damit kann die Gestalt der aufgebrachten Pulverschicht beispielsweise von einer rechteckigen Form abweichen. Somit ist es beispielsweise möglich einen Beschichtungsbereich (auch als Pulverauftragsbereich bezeichnet), in welchem der Pulverauftrag erfolgt, an eine Form einer Bauplattform anzupassen, die von einer rechteckigen Form abweicht, insbesondere eine runde, ovale oder anderweitige Form. Ebenso kann der Beschichtungsbereich an eine Geometrie des herzustellenden Objekts angepasst werden, insbesondere an einen bestimmten schichtparallelen Objektquerschnitt und/oder an eine maximale Abmessung des Objekts in einer schichtparallelen Richtung und/oder an eine zweidimensionale Projektion des Objekts auf eine schichtparallele Ebene. Ebenso kann beispielsweise der Beschichtungsbereich an eine räumliche Verteilung mehrerer herzustellender Objekte in einem Bauraum angepasst werden. Der Beschichtungsbereich bezeichnet hierbei den Bereich eines Baufelds, in welchem tatsächlich ein Schichtauftrag des Aufbaumaterials erfolgt bzw. zwingend erfolgen soll. Der maximale Beschichtungsbereich ist somit bevorzugt im Wesentlichen das Baufeld. Unter "schichtparallel" ist eine Richtung bzw. Ebene parallel zu den aufgebrachten Pulverschichten zu verstehen, d.h. senkrecht zu einer Richtung in welche der Bauvorgang fortschreitet.

Dies ermöglicht es beispielsweise die für einen Schichtauftrag benötigte Pulvermenge gegenüber einem (gedachten) rechteckigen Beschichtungsbereich zu verringern und somit den Herstellungsprozess kostengünstiger und zeiteffizienter zu gestalten. Die Einsparung bei der Pulvermenge kann z.B. bei der Verwendung von Edelmetallpulvern oder anderen relativ teuren Pulverarten besonders vorteilhaft sein.

Neben einem Pulverauftrag in einem nicht-rechteckigen Beschichtungsbereich ist es beispielsweise auch möglich mit der erfindungsgemäßen Dosiervorrichtung eine Zusatzpulvermenge an Stellen bereitzustellen, an denen sich durch die durch den Verfestigungsvorgang bewirkte Verdichtung des Aufbaumaterials Einsenkungen ausbilden.

Vorzugsweise umfasst die Dosiervorrichtung einen Dosierbehälter zum Bevorraten des pulverförmigen Aufbaumaterials, wobei vorzugsweise die Achse (also die Achse des Dosierelements) an dem Dosierbehälter, weiter bevorzugt an einer unteren Öffnung des Dosierbehälters, drehbar gelagert ist. Die Achse des Dosierelements ist also als physisch greifbares mechanisches Element bzw. Elementanordnung realisiert und wird wie eben beschrieben gelagert. Das Aufbaumaterial kann somit beispielsweise durch das Dosierelement lokal unterschiedlich dosiert, d.h. mit lokal unterschiedlichen Pulvermengen, aus dem Dosierbehälter abgegeben werden.

Vorzugsweise weist zumindest eine Oberfläche des Dosierelements zumindest eine Vertiefung mit einem definierten Volumen auf, welche dazu geeignet ist, eine definierte Pulvermenge aufzunehmen. Weiter bevorzugt ist ein Teilvolumen der zumindest einen Vertiefung von der Oberfläche bis zu einem Grund der Vertiefung in einem ersten Abschnitt entlang der Richtung der Achse des Dosierelements größer als in einem zweiten Abschnitt entlang der Richtung der Achse des Dosierelements. Der erste und der zweite Abschnitt können dabei beispielsweise bezogen auf ihre geometrische Form und Größe identische Teilflächen der Oberfläche des Dosierelements sein. So kann beispielsweise eine Dosiervorrichtung zum Abgeben lokal unterschiedlicher Pulvermengen auf einfache Art und Weise bereitgestellt werden.

Die zumindest eine Vertiefung erstreckt sich vorzugsweise im Wesentlichen in einer Längsrichtung, vorzugsweise in Richtung der Längsachse, des Dosierelements. Sie kann eckig ausgeführt sein. Dabei ist die zumindest eine Vertiefung vorzugsweise in ihrem mittleren Bereich bezogen auf die Längsrichtung tiefer und/oder breiter ausgebildet als in einem Randbereich. Damit ist gemeint, dass die zumindest eine Vertiefung vorzugsweise in ihrem mittleren Bereich bezogen auf die Längsrichtung eine größere Abmessung quer zu der Längsrichtung aufweist als in einem Randbereich. Unter einem Randbereich der Vertiefung ist dabei ein Endbereich der Vertiefung entlang der Längsrichtung zu verstehen, also ein Bereich, in dem die Vertiefung bezogen auf die Längsrichtung endet. Alternativ oder zusätzlich nimmt die Tiefe und/oder Breite der zumindest einen Vertiefung vorzugsweise kontinuierlich von der Mitte zum Rand hin ab und/oder die zumindest eine Vertiefung hat vorzugsweise einen nicht eckigen, bevorzugt ovalen, mehr bevorzugt längsovalen, noch mehr bevorzugt elliptischen Umriss. Somit ist beispielsweise ein Dosierelement bereitgestellt, welches bezogen auf die Längsrichtung in seinem mittleren Bereich eine größere Pulvermenge abgibt als in einem Randbereich.

Besonders gut geeignet als erfindungsgemäßes Dosierelement ist ein rotationssymmetrisches Dosierelement, insbesondere wenn die Symmetrie- bzw. Rotationsachse eine Längsachse des Dosierelements ist. Daher umfasst das Dosierelement vorzugsweise eine Walze, weiter bevorzugt ist es als Walze ausgebildet. Vorzugsweise enthält die Walze mindestens zwei, vorzugsweise mehr als zwei, in Umfangsrichtung der Walze angeordnete, vorzugsweise regelmäßig voneinander beabstandete, Vertiefungen. Mit einer Umdrehung der Walze können also beispielsweise gleich mehrere Dosierschritte realisiert werden.

Die Dosiervorrichtung enthält vorzugsweise weiter ein Abstreifelement zum Entfernen des pulverförmigen Aufbaumaterials aus zumindest einem Abschnitt der zumindest einen Vertiefung. Mit einem derartigen Abstreifelement kann beispielsweise im Wesentlichen das gesamte in einer Vertiefung enthalten Pulver aus dieser entfernt und abgegeben werden, wodurch die Genauigkeit der Pulverdosierung verbessert wird, d.h. eine tatsächlich abgegebene Pulvermenge entspricht im Wesentlichen einer durch ein (Teil-)Volumen der Vertiefung vorgegebene Pulvermenge.

Ein erfindungsgemäßer Beschichter dient zum Aus- oder Nachrüsten einer Vorrichtung zum Herstellen eines dreidimensionalen Objekts durch schichtweises Verfestigen von pulverförmigem Aufbaumaterial an den dem Querschnitt des herzustellenden Objekts in der jeweiligen Schicht entsprechenden Stellen und umfasst zumindest eine oben beschriebene Dosiervorrichtung. Der Beschichter ist vorzugsweise dazu ausgebildet, das von der Dosiervorrichtung abgegebene Aufbaumaterial in einer Beschichtungsrichtung (d.h. einer bestimmungsgemäßen Bewegungsrichtung des Beschichters) zu einer Schicht, vorzugsweise einer gleichmäßig dünnen Schicht, auszuziehen. Hierzu kann der Beschichter beispielsweise zumindest ein Beschichtungselement (beispielsweise eine Klinge) aufweisen, welches sich vorzugsweise in einer Richtung quer, vorzugsweise senkrecht, zu der bestimmungsgemäßen Bewegungsrichtung des Beschichters und/oder in Richtung der Achse des Dosierelements erstreckt.

Eine erfindungsgemäße Vorrichtung zum Herstellen eines dreidimensionalen Objekts durch schichtweises Verfestigen von pulverförmigem Aufbaumaterial an den dem Querschnitt des herzustellenden Objekts in der jeweiligen Schicht entsprechenden Stellen mit einem über ein Baufeld in Beschichtungsrichtung bewegbaren Beschichter zum Aufbringen einer Schicht des Aufbaumaterials auf das Baufeld enthält eine erfindungsgemäße Dosiervorrichtung und/oder der Beschichter umfasst eine erfindungsgemäße Dosiervorrichtung. Damit ist es beispielsweise möglich, die oben mit Bezug auf eine erfindungsgemäße Dosiervorrichtung bzw. einen erfindungsgemäßen Beschichter beschriebenen Wirkungen in einer generativen Schichtbauvorrichtung zu erzielen.

Erfindungsgemäß weist das Baufeld winkelig, insbesondere quer, zur Beschichtungsrichtung des Beschichters unterschiedliche Abmessungen entlang der Beschichtungsrichtung auf. Bei Verwendung eines derartigen Baufelds kann dieses beispielsweise gut an eine Geometrie des Beschichtungsbereichs angepasst sein.

Die Dosiervorrichtung kann mit dem Beschichter über das Baufeld hinweg bewegbar in der Vorrichtung angeordnet sein. Alternativ oder ergänzend kann die Dosiervorrichtung in einer bestimmungsgemäßen Ruhe- und/oder Befüllposition des Beschichters in der Vorrichtung angeordnet sein. In letzterem Fall kann beispielsweise von der Dosiervorrichtung eine lokal unterschiedliche Menge an Aufbaumaterial an einer Seite des Baufelds bereitgestellt und dann von dem Beschichter durch Überfahren des Baufelds in Beschichtungsrichtung zu einer Schicht ausgezogen werden.

Ein erfindungsgemäßes Verfahren zum Dosieren von pulverförmigem Aufbaumaterial wird durch die Merkmale des Anspruchs 10 definiert.

Ein erfindungsgemäßes Verfahren zum Herstellen eines dreidimensionalen Objekts wird durch die Merkmale des Anspruchs 11 definiert.

Damit ist es beispielsweise möglich, die oben mit Bezug auf eine erfindungsgemäße Dosiervorrichtung bzw. einen erfindungsgemäßen Beschichter bzw. eine erfindungsgemäße Vorrichtung beschriebenen Wirkungen auch in einem Dosierverfahren bzw. einem generativen Herstellungsverfahren zu erzielen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß einer Ausführungsform der vorliegenden Erfindung.
- Fig. 2: ist eine perspektivische Ansicht eines Dosierelements gemäß einer Ausführungsform der vorliegenden Erfindung,
- Fig. 3a: ist eine schematische Querschnittsansicht des in Fig. 2 gezeigten Dosierelements entlang der in Fig. 2 gezeigten gestrichelten Linie C C',
- Fig. 3b: ist ein vergrößerter Ausschnitt der in Fig. 3a gezeigten Querschnittsansicht und
- Fig. 4: ist eine schematische Draufsicht auf ein Baufeld von oben im Rahmen der Realisierung der vorliegenden Erfindung.

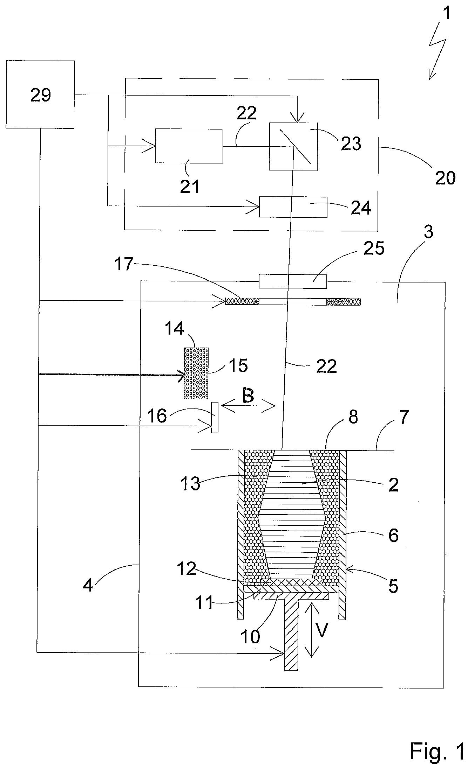

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

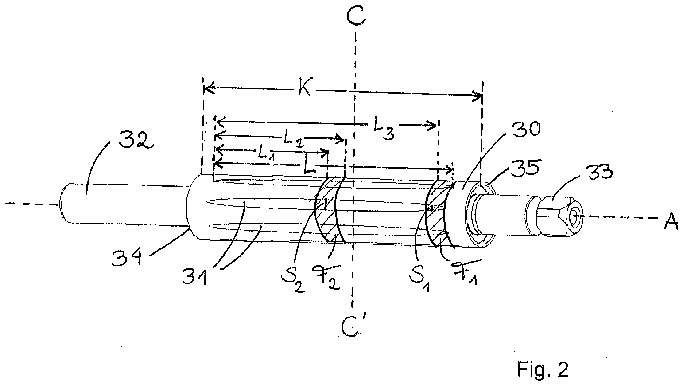

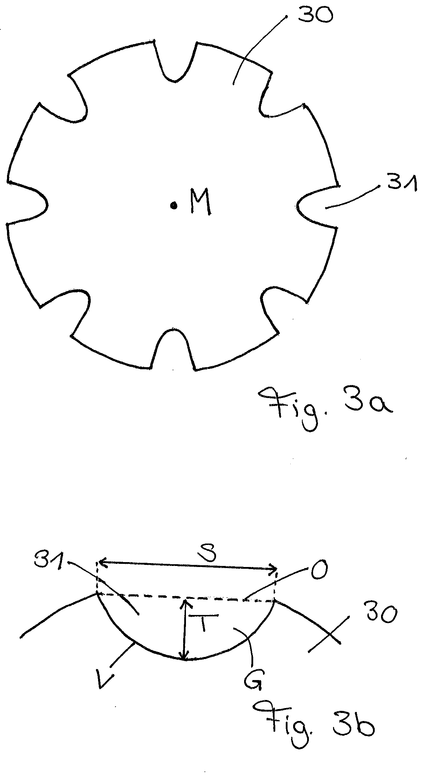

Die Lasersintervorrichtung 1 enthält weiter eine Dosiervorrichtung 14 mit einem Dosierbehälter für ein durch elektromagnetische Strahlung verfestigbares pulverförmiges Aufbaumaterial 15. An seiner Unterseite weist der Dosierbehälter eine nicht gezeigte Ausgabeöffnung auf, in welcher ein als Walze ausgebildetes Dosierelement vorgesehen ist. Diese im Folgenden auch als Dosierwalze bezeichnete Walze / Dosierelement wird unten in Bezug auf Fig. 2, 3a, 3b näher beschrieben. Ferner kann in der Vorrichtung 1 noch ein nicht gezeigter Vorratsbehälter zum Bevorraten von pulverförmigen Aufbaumaterial angeordnet sein, der dazu ausgebildet ist, der Dosiervorrichtung 14 pulverförmiges Aufbaumaterial 15 zuzuführen.

Die Vorrichtung 1 enthält weiter einen in einer horizontalen Richtung B, im Folgenden auch als Beschichtungsrichtung bezeichnet, bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung 1 auf einem Speichermedium gespeichert sein, von dem aus es in die Vorrichtung 1, insbesondere in die Steuereinheit 29, geladen werden kann.

Im Betrieb wird zum Aufbringen einer Pulverschicht zunächst der Träger 10 um eine Höhe abgesenkt, die der gewünschten Schichtdicke bzw. Schichtstärke entspricht. Der Beschichter 16 fährt zunächst zu der Dosiervorrichtung 14 und nimmt aus ihr eine zum Aufbringen einer Schicht ausreichende Menge des Aufbaumaterials 15 auf. Dann fährt er über das Baufeld 8, bringt dort pulverförmiges Aufbaumaterials 15 auf die Bauunterlage 12 oder eine bereits vorher vorhandene Pulverschicht auf und zieht es zu einer Pulverschicht aus. Das Aufbringen erfolgt zumindest über den gesamten Querschnitt des herzustellenden Objekts 2. Der Bereich, in welchem ein Schichtauftrag erfolgt, wird als Beschichtungsbereich bezeichnet. Der Beschichtungsbereich ist somit bevorzugt das gesamte Baufeld 8, also der durch die Behälterwandung 6 begrenzte Bereich. Optional wird das pulverförmige Aufbaumaterial 15 mittels der Strahlungsheizung 17 auf eine Arbeitstemperatur aufgeheizt.

Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen mittels der durch die Strahlung eingebrachten Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Fig. 2 zeigt ein Dosierelement gemäß einer Ausführungsform der Erfindung. Das Dosierelement ist als eine Walze 30 ausgebildet und weist eine Längsachse A auf. Die Walze 30 ist mittels Befestigungs- und/oder Aufnahmeelementen 32, 33 um ihre Längsachse A drehbar in der Ausgabeöffnung des Dosierbehälters gelagert. Die Walze 30 erstreckt sich entlang der Längsrichtung A über eine Länge K zwischen ihren äußeren Rändern 34 und 35 und hat im Wesentlichen auf ihrer gesamten Länge K einen gleichbleibenden kreisförmigen Querschnitt. Auf ihrer Oberfläche weist die Walze 30 mehrere (hier acht, von denen drei in der Figur vollständig sichtbar sind) in Umfangsrichtung regelmäßig voneinander beabstandete Vertiefungen 31 auf. Jede der Vertiefungen 31 erstreckt sich über eine Vertiefungslänge L entlang der Länge K der Walze 30, d.h. parallel zu ihrer Längsachse A und vorzugsweise bis zu einem Abstand vom äußeren Rand 34 bzw. 35 der Walze 30. Ferner weisen die Vertiefungen 31 in der Ebene der Walzenoberfläche einen im Wesentlichen elliptischen Umriss auf. Weiter sind in Fig. 2 ein erster Flächenabschnitt F₁ und ein zweiter Flächenabschnitt F₂ auf der Oberfläche der Walze 30 gezeigt. Sie weisen beide die Form eines geraden Kreiszylinders auf und haben denselben Flächeninhalt. Der eine Flächenabschnitt F₂ erstreckt sich in einem Längenbereich zwischen einem ersten Randabstand L₁ und einem zweiten Randabstand L₂ der Walze 30 und F₁ in einem Längenbereich zwischen einem dritten Randabstand L₃ und der Vertiefungslänge L. Die drei genannten Randabstände L₁, L₂, L₃ erstrecken sich entlang von Teillängen der Vertiefungslänge L und beginnen allesamt am im Bild links angeordneten Ende der Vertiefungslänge L. Bezogen auf die Längsrichtung A der Walze 30 ist somit der erste Flächenabschnitt F₁ ein rechter Randbereich der Walze 30 und der zweite Randbereich F₂ ein mittlerer Bereich der Walze 30 bezogen auf ihre Längserstreckung. Analog dazu gibt es einen linken Randbereich der Walze 30, welcher in Fig. 2 jedoch nicht eigens angedeutet ist. Die Vertiefungen 31 weisen entlang des Umfangs der Walze 30 Breiten S₁, S₂ auf, wobei erkennbar ist, dass die Breite S₁ im Flächenabschnitt F₁ geringer ist als die Breite S₂ im Flächenabschnitt F₂.

Fig. 3a zeigt eine Querschnittsfläche der in Fig. 2 gezeigten Walze 30 senkrecht zu ihrer Längsachse A entlang der gestrichelten Linie C-C' und Fig. 3b einen vergrößerten Ausschnitt einer in Fig. 3a gezeigten Vertiefung 31 der Walze 30. Die Längsachse A der Walze 30 verläuft durch den in Fig. 3a gezeigten Mittelpunkt M der Querschnittsfläche senkrecht zu dieser. Die Vertiefungen 31 sind jeweils im Wesentlichen U- oder V-förmige Ausnehmungen oder Ausnehmungen in Form eines Kreisabschnittes (Konturlinie V in Fig. 3b) bezogen auf eine gedachte (in Fig. 3b gestrichelt gezeichnete) Oberfläche O der Vertiefung 31. Die Vertiefungen 31 weisen jeweils eine Tiefe T und eine Breite S auf, wobei die Tiefe T der maximale Abstand der Konturlinie V von der Oberfläche O der Vertiefung 31 in der Querschnittsfläche ist und die Breite S die Schnittlinie der Oberfläche O mit der Konturlinie V in der Querschnittsfläche ist. Die Tiefe T und die Breite S sind somit Abmessungen in der Querschnittsfläche der Walze 30 senkrecht zu ihrer Längsachse A. Die Oberfläche O und die Konturlinie V schließen eine Fläche G der Vertiefung 31 in der Querschnittsfläche ein. Das Gesamtvolumen der Vertiefung 31 ist somit als Integral der Flächen G über die gesamte Vertiefungslänge L der Vertiefung 31 gegeben. Analog dazu kann das Gesamtvolumen aller Vertiefungen 31 der Walze 30 durch Addition der Gesamtvolumina der einzelnen Vertiefungen 31 bestimmt werden.

Bevorzugt nehmen die Breite S und/oder die Tiefe T der Vertiefung 31 in Richtung der Achse A von der Mitte der Walze 30 zu ihrem Rand 34, 35 hin kontinuierlich ab, im vorliegenden Ausführungsbeispiel gilt dies sowohl für die Breite S als auch für die Tiefe T. In Fig. 2 ist beispielhaft die Breite S₁ einer Vertiefung 31 in dem Randbereich F₁ gezeigt sowie die Breite S₂ der Vertiefung in dem mittleren Bereich F₂, wobei wie erwähnt die Breite S₁ kleiner ist als die Breite S₂. Somit nimmt auch die Fläche G der Vertiefung 31 in einem Querschnitt von dem mittleren Bereich F₂ zum Randbereich F₁ hin ab. Entsprechend ist das in dem mittleren Bereich F₂ enthaltene Teilvolumen der Vertiefungen 31 größer als das in dem Randbereich F₁ enthaltene Teilvolumen. Die Walze 30 kann deshalb in ihrem mittleren Bereich F₂ mehr Pulver (d.h. ein größeres Pulvervolumen und somit eine größere Pulvermenge) aufnehmen als in ihrem Randbereich F₁.

Zum Bereitstellen einer Pulvermenge für einen Schichtauftrag wird die Walze 30 um ihre Längsachse A in der Ausgabeöffnung des Dosierbehälters gedreht. Dabei nehmen die mit dem in dem Behälter bevorrateten Pulver in Kontakt kommenden Vertiefungen 31 der Walze 30 jeweils ihrem Volumen entsprechende Pulvermengen auf. Die durch die Ausgabeöffnung freigegebenen Vertiefungen 31, d.h. die dem in dem Behälter bevorrateten Pulver auf der Walze 30 gegenüberliegenden Vertiefungen, geben das Pulver ab. Das Pulver kann hierbei beispielsweise durch die Schwerkraft nach unten aus den Vertiefungen heraus gebracht werden. Dies kann zusätzlich mithilfe eines (nicht dargestellten) Abstreifelements unterstützt werden, das so angeordnet und ausgebildet ist, dass es während der Drehung der Walze 30 um ihre Achse A in die Vertiefung 31 eingreift, d.h. automatisch oder teilautomatisch eingeführt wird, und das in der jeweiligen Vertiefung 31 enthaltene Pulver mechanisch aus der Vertiefung entfernt.

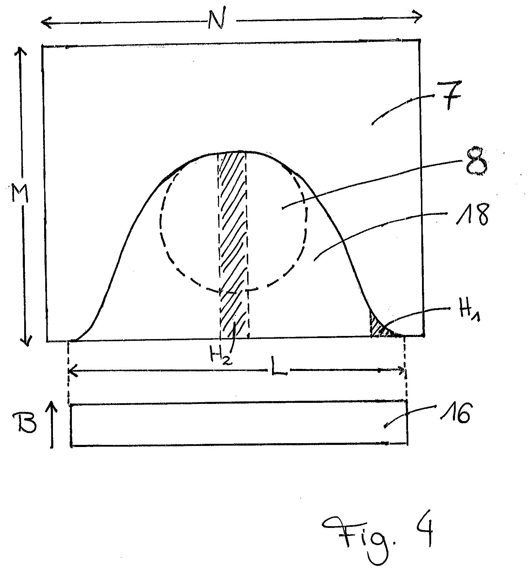

Fig. 4 zeigt eine Aufsicht auf einen Bereich der Arbeitsebene 7 von oben mit einer in einem Beschichtungsbereich 18 innerhalb der Arbeitsebene 7 aufgebrachten Pulverschicht und einem Beschichter 16 in einer Ruheposition außerhalb des gezeigten Bereichs der Arbeitsebene 7. Der in Fig. 4 gezeigte rechteckige Bereich der Arbeitsebene 7 weist beispielsweise eine Breite N und eine Länge M auf. Ein Beschichtungselement (beispielsweise eine oder mehrere Klingen) des Beschichters 16 erstreckt sich zumindest über die Vertiefungslänge L der Vertiefungen 31 der Walze 30 und ist parallel zur Breite N des gezeigten Bereichs der Arbeitsebene und in Beschichtungsrichtung B entlang der Länge M des gezeigten Bereichs der Arbeitsebene hinweg bewegbar in der Vorrichtung 1 angeordnet. Die Dosiervorrichtung 14 (in Fig. 4 nicht gezeigt) ist so in der Vorrichtung 1 oberhalb der Ruheposition des Beschichters 16 angeordnet, dass die Längsachse A der Walze 30 im Wesentlichen senkrecht zur Beschichtungsrichtung B des Beschichters 16 verläuft.

Der Beschichtungsbereich 18 ist ein Teilbereich der Arbeitsebene 7 bzw. des in Fig. 4 gezeigten Bereichs der Arbeitsebene 7. In dem Beschichtungsbereich 18 liegen alle schichtparallelen Querschnitte des herzustellenden Objekts 2. Er weist eine maximale Abmessung L senkrecht zur Beschichtungsrichtung B auf, die der Vertiefungslänge L der Vertiefungen 31 der Walze 30 entspricht. Die Abmessung des Beschichtungsbereichs 18 senkrecht zur Beschichtungsrichtung B nimmt mit zunehmendem Abstand von dem unteren Rand des Bereichs der Arbeitsebene 7 (an dem der Beschichter 16 den Beschichtungsvorgang beginnt), d.h. in Beschichtungsrichtung B, ab. In dem Beschichtungsbereich 18 sind ein erster streifenförmiger Teilbereich H₁ und ein zweiter streifenförmiger Teilbereich H₂ gekennzeichnet, welche sich jeweils über eine konstante Breite in die Beschichtungsrichtung B erstrecken. Dabei kennzeichnet der erste Teilbereich H₁ den Bereich einer Pulverschicht, in welchem das aus dem Randbereich F₁ der Walze 30 an den Beschichter 16 abgegebene pulverförmige Aufbaumaterial durch den Beschichter 16 ausgezogen wird. Entsprechend kennzeichnet der zweite Teilbereich H₂ den Bereich der Pulverschicht, in welchem das aus dem mittleren Bereich F₂ der Walze 30 an den Beschichter 16 abgegebene pulverförmige Aufbaumaterial durch den Beschichter 16 ausgezogen wird. Da die aus dem mittleren Bereich F₂ abgegebene Pulvermenge größer ist als die aus dem Randbereich F₁ abgegebene Pulvermenge und der Beschichter 16 die lokal unterschiedlichen Pulvermengen zu einer gleichmäßigen Schicht auszieht, hat der Teilbereich H₂ in Beschichtungsrichtung B eine größere Flächen- bzw. Längenabmessung als der Teilbereich H₁.

Weiter ist in Fig. 4 ein rundes Baufeld 8 (bedingt durch eine runde Bauplattform 12) gezeigt (gestrichelter Kreis). Wie aus Fig. 4 ersichtlich ist, ist die geometrische Form des Beschichtungsbereichs 18, in dem ein Pulverauftrag erfolgt, an die geometrische Form bzw. Position des Baufelds 8 angepasst. So füllt der Beschichtungsbereich 18 nicht den gesamten in Fig. 4 gezeigten Bereich der Arbeitsebene 7 bzw. den gesamten von dem Beschichter 16 bzw. dessen Beschichtungselement überfahrbaren Bereich aus, sondern die Abmessungen des Beschichtungsbereichs senkrecht zur Beschichtungsrichtung B nehmen wie oben beschrieben in Beschichtungsrichtung mit zunehmendem Abstand vom Rand des Bereichs der Arbeitsebene 7 ab, so dass der Beschichtungsbereich 18 eine Rundung aufweist, die an das runde Baufeld 8 angepasst ist.

Das Baufeld 8, welches wie oben beschrieben als der innerhalb der Öffnung des Behälters 5 liegende Bereich der Arbeitsebene 7 definiert ist, kann eine rechteckige Form aufweisen, es kann jedoch auch eine nicht-rechteckige Form, beispielsweise wie in Fig. 4 gezeigt eine runde Form, aufweisen. Die geometrische Form des Beschichtungsbereichs 18 kann dann an die geometrische Form des Baufelds 8 angepasst sein bzw. umgekehrt kann das Baufeld 8 ebenfalls an die geometrische Form des Beschichtungsbereichs angepasst sein.

Ferner können in der Vorrichtung 1 Überlaufschlitze vorgesehen sein, in denen Pulver aus Bereichen des Beschichtungsbereichs aufgenommen wird, die außerhalb des Baufelds 8 liegen.

Die Vertiefungen 31 auf der Oberfläche der Walze 30 sind nicht auf die oben beschriebene Gestalt beschränkt. Vielmehr können die Vertiefungen jede beliebige geometrische Form, Erstreckung und Abmessung (insbesondere Breite und Tiefe) annehmen. Zudem müssen sie nicht regelmäßig beabstandet auf der Walzenoberfläche angeordnet sein. Auch können weniger, z.B. auch nur eine, oder mehr Vertiefungen als die acht in Fig. 3a gezeigten Vertiefungen in der Walze vorgesehen sein. Generell sind die Vertiefungen der Walze derart ausgebildet und/oder auf dieser angeordnet, dass die Walze dazu geeignet ist, entlang der Richtung ihrer Längsachse A lokal unterschiedliche Pulvermengen abzugeben, so dass ein dem herzustellenden Objekt angepasster Beschichtungsbereich erzielbar ist.

An der Walze 30 kann zusätzlich ein Abstreifelement zum Entfernen des pulverförmigen Aufbaumaterials aus den Vertiefungen 31 vorgesehen sein.

In der oben beschriebenen Lasersinter- oder Laserschmelzvorrichtung können auch mehrere Objekte gleichzeitig auf der Bauunterlage aufgebaut werden. Dann ist der Beschichtungsbereich vorzugsweise nicht nur an die Geometrie der schichtparallelen Objektquerschnitte angepasst, sondern auch an die räumliche Anordnung der herzustellenden Objekte auf der Bauunterlage bzw. in dem Baubehälter.

Die oben beschriebene Dosierwalze wird zumindest zum Bereitstellen einer Pulvermenge für einen Schichtauftrag im Rahmen des Herstellungsprozesses eines oder mehrerer dreidimensionaler Objekte verwendet. Es können auch unterschiedliche Walzen für verschiedene Schichten verwendet werden, so dass zumindest zwei Pulverschichten in verschiedenen Beschichtungsbereichen aufgetragen werden. Ein Beschichtungsbereich muss somit nicht alle schichtparallelen Querschnitte des herzustellenden Objekts enthalten.

In der oben beschriebenen Ausführungsform ist die Dosiervorrichtung ortsfest in der Vorrichtung angeordnet und gibt zu Beginn eines Schichtauftrags die benötigte Pulvermenge lokal differenziert entlang der Richtung ihrer Längsachse A ab. Alternativ oder ergänzend kann die Dosiervorrichtung jedoch auch zusammen mit dem Beschichter in Beschichtungsrichtung über den Beschichtungsbereich hinweg bewegbar in der Vorrichtung angeordnet sein, beispielsweise kann die Dosiervorrichtung integral mit dem Beschichter gebildet sein.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines pulverförmigen Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden. Allgemein bezieht sich die Erfindung auf das generative Herstellen eines Objekts mittels schichtweisen Auftragens und selektiven Verfestigens eines pulverförmigen Aufbaumaterials unabhängig von der Art und Weise, in der das Aufbaumaterial verfestigt wird.

Als Aufbaumaterial können verschiedene Arten von Pulver verwendet werden, insbesondere Metallpulver wie beispielsweise Edelmetallpulver (z.B. Gold) oder edelmetallhaltige Pulver, sowie Kunststoffpulver, Keramikpulver, Sand, gefüllte oder gemischte Pulver.

## Patentansprüche

1. Vorrichtung (1) zum Herstellen eines dreidimensionalen Objekts (2) durch schichtweises Verfestigen von pulverförmigem Aufbaumaterial (15) an den dem Querschnitt des herzustellenden Objekts (2) in der jeweiligen Schicht entsprechenden Stellen, wobei die Vorrichtung ein Baufeld (8) aufweist und einen über das Baufeld (8) in einer Beschichtungsrichtung (B) bewegbaren Beschichter (16) zum Aufbringen einer Schicht des Aufbaumaterials (15) auf das Baufeld (8),
wobei die Vorrichtung (1) eine Dosiervorrichtung (14) enthält,
wobei die Dosiervorrichtung (14) ein Dosierelement (30) aufweist, das um eine Achse, vorzugsweise eine eigene Achse, besonders bevorzugt um eine, insbesondere eigene, Längsachse (A), drehbar ist und das dazu geeignet ist, das pulverförmige Aufbaumaterial (15) dosiert abzugeben, wobei das Dosierelement (30) dazu ausgebildet ist, entlang der Richtung der Achse (A) lokal unterschiedliche Pulvermengen abzugeben **dadurch gekennzeichnet, dass** das Baufeld (8) winkelig, insbesondere quer, zur Beschichtungsrichtung (B) des Beschichters (16) unterschiedliche Abmessungen entlang der Beschichtungsrichtung (B) aufweist.

2. Vorrichtung nach Anspruch 1, wobei die Dosiervorrichtung (14) einen Dosierbehälter zum Bevorraten des pulverförmigen Aufbaumaterials umfasst und wobei vorzugsweise die Achse (A) an dem Dosierbehälter, weiter bevorzugt an einer unteren Öffnung des Dosierbehälters, drehbar gelagert ist.

3. Vorrichtung nach Anspruch 1 oder 2, wobei zumindest eine Oberfläche des Dosierelements (30) zumindest eine Vertiefung (31) mit einem definierten Volumen aufweist, welche dazu geeignet ist, eine definierte Pulvermenge aufzunehmen.

4. Vorrichtung nach Anspruch 3, wobei ein Teilvolumen der zumindest einen Vertiefung von der Oberfläche bis zu einem Grund der Vertiefung in einem ersten Abschnitt (F₂) entlang der Richtung der Achse (A) des Dosierelements (30) größer ist als in einem zweiten Abschnitt (F₁) entlang der Richtung der Achse (A) des Dosierelements (30).

5. Vorrichtung nach Anspruch 3 oder 4, wobei die zumindest eine Vertiefung (31) sich im Wesentlichen in einer Längsrichtung, vorzugsweise in Richtung der Längsachse (A), des Dosierelements (30) erstreckt und wobei die zumindest eine Vertiefung (31) vorzugsweise in ihrem mittleren Bereich (F₂) bezogen auf die Längsrichtung (A) tiefer und/oder breiter ausgebildet ist als in einem Randbereich (F₁) und/oder
wobei die Tiefe (T) und/oder Breite (S) der zumindest einen Vertiefung (31) vorzugsweise kontinuierlich von der Mitte zum Rand hin abnimmt und/oder
wobei die zumindest eine Vertiefung (31) einen nicht eckigen, bevorzugt ovalen, mehr bevorzugt längsovalen, noch mehr bevorzugt elliptischen Umriss hat.

6. Vorrichtung nach einem der Ansprüche 1 bis 5, wobei das Dosierelement eine Walze (30) umfasst, bevorzugt als Walze (30) ausgebildet ist.

7. Vorrichtung nach Anspruch 6, wobei die Walze (30) mindestens zwei, vorzugsweise mehr als zwei, in Umfangsrichtung der Walze (30) angeordnete, vorzugsweise regelmäßig voneinander beabstandete, Vertiefungen (31) enthält.

8. Vorrichtung nach einem der Ansprüche 3 bis 7 mit weiter einem Abstreifelement zum Entfernen des pulverförmigen Aufbaumaterials aus zumindest einem Abschnitt der zumindest einen Vertiefung.

9. Vorrichtung nach einem der Ansprüche 1 bis 8, wobei die Dosiervorrichtung (14) mit dem Beschichter (16) über das Baufeld (8) hinweg bewegbar in der Vorrichtung (1) angeordnet ist und/oder wobei die Dosiervorrichtung (14) in einer bestimmungsgemäßen Ruhe- und/oder Befüllposition des Beschichters (16) in der Vorrichtung (1) angeordnet ist.

10. Verfahren zum Dosieren von pulverförmigem Aufbaumaterial (15) in einer Vorrichtung (1) zum Herstellen eines dreidimensionalen Objekts (2) durch schichtweises Verfestigen des pulverförmigem Aufbaumaterials (15) an den dem Querschnitt des herzustellenden Objekts (2) in der jeweiligen Schicht entsprechenden Stellen, wobei zumindest eine Schicht des pulverförmigen Aufbaumaterials (15) auf ein Baufeld (8) mittels eines in einer Beschichtungsrichtung (B) über das Baufeld (8) fahrenden Beschichters (16) aufgebracht wird, umfassend die folgenden Schritte:
- Bereitstellen einer Dosiervorrichtung (14) mit einem Dosierelement (30), das um eine Achse, vorzugsweise eine eigene Ache, besonders bevorzugt um eine, insbesondere eigene, Längsachse (A), drehbar ist und das pulverförmige Aufbaumaterial (15) dosiert abgibt, wobei das Dosierelement (30) entlang der Richtung der Achse (A) lokal unterschiedliche Pulvermengen abgibt **dadurch gekennzeichnet, dass** das Baufeld (8) winkelig, insbesondere quer, zur Beschichtungsrichtung (B) des Beschichters (16) unterschiedliche Abmessungen entlang der Beschichtungsrichtung (B) aufweist.

11. Verfahren zum Herstellen eines dreidimensionalen Objekts (2) durch schichtweises Verfestigen von pulverförmigem Aufbaumaterial (15) an den dem Querschnitt des herzustellenden Objekts (2) in der jeweiligen Schicht entsprechenden Stellen, wobei zumindest eine Schicht des pulverförmigen Aufbaumaterials (15) auf ein Baufeld (8) mittels eines in einer Beschichtungsrichtung (B) über das Baufeld (8) fahrenden Beschichters (16) aufgebracht wird, wobei das Baufeld (8) winkelig, insbesondere quer, zur Beschichtungsrichtung (B) des Beschichters (16) unterschiedliche Abmessungen entlang der Beschichtungsrichtung (B) aufweist, und
wobei das Dosieren des pulverförmigen Aufbaumaterials (15) ein Verfahren nach Anspruch 10 umfasst.

## Claims

1. A device (1) for producing a three-dimensional object (2) by means of solidifying, layer by layer, a building material in powder form (15) at those positions that correspond to the cross-section of the object (2) to be produced in the respective layer, the device having a build area (8) and a recoater (16) that can be moved across the build area (8) in a recoating direction (B) for applying a layer of the building material (15) in the build area (8),
wherein the device (1) comprises a metering device (14),
wherein the metering device (14) has a metering element (30), which metering element is rotatable about an axis, preferably an axis of its own, particularly preferably about an, in particular its own, longitudinal axis (A) and is suitable for dispensing the building material in powder form (15) in a metered manner, wherein
the metering element (30) is designed to dispense locally different amounts of powder along the direction of the axis (A)
**characterized in that** at an angle, in particular transverse, to the recoating direction (B) of the recoater (16), the build area (8) has different dimensions along the recoating direction (B).

2. The device according to claim 1, wherein the metering device (14) comprises a metering container for storing the building material in powder form and wherein preferably the axis (A) is mounted rotatably on the metering container, more preferably on a lower opening of the metering container.

3. The device according to claim 1 or 2, wherein at least one surface of the metering element (30) comprises at least one indentation (31) having a defined volume, which indentation is suitable for receiving a defined amount of powder.

4. The device according to claim 3, wherein a sub-volume of the at least one indentation from the surface to a bottom of the indentation in a first section (F₂) along the direction of the axis (A) of the metering element (30) is greater than in a second section (F₁) along the direction of the axis (A) of the metering element (30).

5. The device according to claim 3 or 4, wherein the at least one indentation (31) extends substantially in a longitudinal direction, preferably in the direction of the longitudinal axis (A), of the metering element (30) and wherein the at least one indentation (31) is preferably designed to be deeper and/or wider in its central region (F₂) than in a marginal region (F₁) with respect to the longitudinal direction (A) and/or
wherein the depth (T) and/or width (S) of the at least one indentation (31) decreases preferably in a stepless manner from the center towards the edge and/or
wherein the at least one indentation (31) has a non-angular, preferably oval, more preferably longitudinally oval, even more preferably elliptical contour.

6. The device according to one of claims 1 to 5, wherein the metering device comprises a roller (30), preferably is designed as a roller (30).

7. The device according to claim 6, wherein the roller (30) comprises at least two, preferably more than two, indentations (31) arranged in the circumferential direction of the roller (30), which indentations (31) are preferably spaced at equal distance from one another.

8. The device according to one of claims 3 to 7, further having a wiping element for removing the building material in powder form from at least a section of the at least one indentation.

9. The device according to one of claims 1 to 8, wherein the metering device (14) is arranged in the device (1) so as to be movable together with the recoater (16) across the build area (8) and/or wherein the metering device (14) is arranged in the device (1) at an intended rest and/or filling position of the recoater (16).

10. A method of metering a building material in powder form (15) in a device (1) for producing a three-dimensional object (2) by means of solidifying, layer by layer, the building material in powder form (15) at those positions that correspond to the cross-section of the object (2) to be produced in the respective layer, wherein at least one layer of building material in powder form (15) is applied in a build area (8) by means of a recoater (16) moving across the build area (8) in a recoating direction (B), the method comprising the steps of:
- providing a metering device (14) having a metering element (30), which metering element is rotatable about an axis, preferably an axis of its own, particularly preferably about an, in particular its own, longitudinal axis (A), and which dispenses the building material in powder form (15) in a metered manner, wherein
the metering element (30) dispenses locally different amounts of powder along the direction of the axis (A), **characterized in that**
at an angle, in particular transverse, to the recoating direction (B) of the recoater (16) the build area (8) has different dimensions along the recoating direction (B).

11. A method of producing a three-dimensional object (2) by means of solidifying, layer by layer, a building material in powder form (15) at those positions that correspond to the cross-section of the object (2) to be produced in the respective layer, wherein at least one layer of building material in powder form (15) is applied in a build area (8) by means of a recoater (16) moving in a recoating direction (B) across the build area (8), wherein at an angle, in particular transverse, to the recoating direction (B) of the recoater (16) the build area (8) has different dimensions along the recoating direction (B), and
wherein metering of the building material in powder form (15) comprises the method according to claim 10.

## Revendications

1. Dispositif (1) de fabrication d'un objet (2) tridimensionnel par solidification par couches d'un matériau de construction (15) pulvérulent contre les emplacements correspondant à la coupe transversale de l'objet (2) à fabriquer dans la couche respective, dans lequel le dispositif présente un champ de construction (8) et un enducteur (16) déplaçable dans une direction d'enduction (B) par-dessus le champ de construction (8) pour appliquer une couche du matériau de construction (15) jusque sur le champ de construction (8),
dans lequel le dispositif (1) contient un dispositif de dosage (14),
dans lequel le dispositif de dosage (14) présente un élément de dosage (30) qui peut tourner autour d'un axe, de préférence un axe qui lui est propre, davantage de préférence autour d'un axe longitudinal (A), en particulier qui lui est propre, et qui est adapté pour décharger de façon dosée le matériau de construction (15) pulvérulent, dans lequel
l'élément de dosage (30) est conçu pour décharger localement des quantités de poudre différentes dans la direction de l'axe (A),
**caractérisé en ce que**
le champ de construction (8) présente angulairement, en particulier transversalement, à la direction d'enduction (B) de l'enducteur (16), des dimensions différentes dans la direction d'enduction (B).

2. Dispositif selon la revendication 1, dans lequel le dispositif de dosage (14) comprend un réservoir de dosage pour l'approvisionnement en matériau de construction pulvérulent, et dans lequel de préférence l'axe (A) est monté en rotation contre le réservoir de dosage, davantage de préférence contre un orifice inférieur du réservoir de dosage.

3. Dispositif selon la revendication 1 ou 2, dans lequel au moins une surface de l'élément de dosage (30) présente au moins un renfoncement (31) avec un volume défini, lequel renfoncement est adapté pour recevoir une quantité de poudre définie.

4. Dispositif selon la revendication 3, dans lequel un volume partiel du au moins un renfoncement depuis la surface et jusqu'à un fond du renfoncement est supérieur dans une première section (F₂) dans la direction de l'axe (A) de l'élément de dosage (30) à celui dans une seconde section (F₁) dans la direction de l'axe (A) de l'élément de dosage (30).

5. Dispositif selon la revendication 3 ou 4, dans lequel le au moins un renfoncement (31) s'étend sensiblement dans une direction longitudinale, de préférence dans la direction de l'axe longitudinal (A), de l'élément de dosage (30), et dans lequel le au moins un renfoncement (31), de préférence dans sa région centrale (F₂) par rapport à la direction longitudinale (A) est conçu plus profond et/ou plus large que dans une région de bord (F₁) et/ou
dans lequel la profondeur (T) et/ou la largeur (S) du au moins un renfoncement (31) diminue de préférence en continu depuis le milieu en allant vers le bord, et/ou
dans lequel le au moins un renfoncement (31) a un contour non anguleux, de préférence ovale, davantage de préférence longitudinalement ovale, encore davantage de préférence elliptique.

6. Dispositif selon l'une des revendications 1 à 5, dans lequel l'élément de dosage comprend un rouleau (30), de préférence conçu en tant que rouleau (30).

7. Dispositif selon la revendication 6, dans lequel le rouleau (30) contient au moins deux, de préférence plus de deux, renfoncements (31) agencés dans la direction circonférentielle du rouleau (30), de préférence espacés régulièrement les uns des autres.

8. Dispositif selon l'une des revendications 3 à 7 avec en outre un élément de raclage pour éliminer le matériau de construction pulvérulent d'au moins une section du au moins un renfoncement.

9. Dispositif selon l'une des revendications 1 à 8, dans lequel le dispositif de dosage (14) est agencé dans le dispositif (1) de façon déplaçable avec l'enducteur (16) par-delà le champ de construction (8), et/ou dans lequel le dispositif de dosage (14) est agencé dans le dispositif (1), conformément aux prescriptions, dans une position de repos et/ou de remplissage de l'enducteur (16).

10. Procédé de dosage d'un matériau de construction (15) pulvérulent dans un dispositif (1) de fabrication d'un objet (2) tridimensionnel par solidification par couches du matériau de construction (15) pulvérulent contre les emplacements correspondant à la coupe transversale de l'objet (2) à fabriquer dans la couche respective, dans lequel au moins une couche du matériau de construction (15) pulvérulent est appliquée jusque sur un champ de construction (8) au moyen d'un enducteur (16) se déplaçant dans une direction d'enduction (B) par-dessus le champ de construction (8), comprenant les étapes suivantes :
- fournir un dispositif de dosage (14) avec un élément de dosage (30) qui peut tourner autour d'un axe, de préférence un axe qui lui est propre, davantage de préférence autour d'un axe longitudinal (A), en particulier qui lui est propre, et qui décharge de façon dosée le matériau de construction (15) pulvérulent, dans lequel
l'élément de dosage (30) décharge localement des quantités de poudre différentes dans la direction de l'axe (A), **caractérisé en ce que** le champ de construction (8) présente angulairement, en particulier transversalement, à la direction d'enduction (B) de l'enducteur (16), des dimensions différentes dans la direction d'enduction (B).

11. Procédé de fabrication d'un objet (2) tridimensionnel par solidification par couches du matériau de construction (15) pulvérulent contre les emplacements correspondant à la coupe transversale de l'objet (2) à fabriquer dans la couche respective, dans lequel au moins une couche du matériau de construction (15) pulvérulent est appliquée jusque sur un champ de construction (8) au moyen d'un enducteur (16) se déplaçant dans une direction d'enduction (B) par-dessus le champ de construction (8), dans lequel le champ de construction (8) présente angulairement, en particulier transversalement, à la direction d'enduction (B) de l'enducteur (16), des dimensions différentes dans la direction d'enduction (B), et
dans lequel le dosage du matériau de construction (15) pulvérulent comprend un procédé selon la revendication 10.
